# EUROPEAN PATENT SPECIFICATION

(11) **EP 2 736 342 B1**
(45) Date of publication and mention of the grant of the patent: **06.09.2017**
(21) Application number: 12738041.8
(22) Date of filing: 18.07.2012
(51) Int. Cl.: A21C 3/02

(54) **ADJUSTABLE UNIT FOR SHEETING DOUGH**
EINSTELLBARE EINHEIT ZUM AUSROLLEN VON TEIG
UNITÉ RÉGLABLE POUR MISE EN FEUILLE DE PÂTE

(30) Priority: 26.07.2011 IT MI20111390
(43) Date of publication of application: 04.06.2014
(73) Proprietor: Trivi S.r.l., 28066 Galliate (Novara) (IT)
(72) Inventor: PANIGONI, Alberto, I-28066 Galliate (Novara) (IT); UBEZIO, Edoardo, I-28065 Galliate (Novara) (IT)
(74) Representative: Giuli, Maurizio Mario Galdino
(86) International application number: PCT/EP2012/003027
(87) International publication number: WO 2013/013791

(56) References cited:
- EP-A1- 1 360 902
- EP-A2- 0 953 287
- EP-A2- 1 449 437
- EP-B1- 1 111 997

## Description

The present invention relates to an adjustable unit for the creation of dough.

In the field of machines for the creation of dough, processes and machines are used which, starting from generic doughy material fed to an area which acts as a hopper, form rolled pastry. This is achieved thanks to the help of associated conveyor belts sliding on forming heads called "planet carrier heads".

The conveyor belt rotates around the planet carrier head and cooperates with a conveyor and advance belt of the dough.

A similar arrangement has been produced and sold by the Applicant since 1988 in a unit for the creation of dough wherein the conveyor belt which rotates around the planet carrier head is positioned in the upper part, and the conveyor and advance belt of the dough is situated in the lower part.

In this way, there is an almost optimum cooperation between the two parts of the unit. The presence of the rollers, in fact, spaced on a diameter of the planet carrier head, ensures that sections of the belt rotating around the head, are straight and favourably cooperate with the underlying conveyor and advance belt.

An alternating compression action is therefore exerted on the dough carried by the underlying conveyor and advance belt.

Subsequently, only around 1998, i.e. almost ten years later, were units divulged and probably produced, for the mechanical processing of dough, such as those object of European patent EP 1111997.

This patent indicates different embodiments of a unit for the processing of dough, which is assumed to be inventive with respect to the known art. In the description of European patent EP 1111997, it can be observed that the known art is limited to a series of specified documents. There is no mention of the unit for the processing of dough of 1988 produced and sold by the Applicant of the present application.

In a simplified arrangement such as that object of said unit for the creation of dough of 1998, the conveyor belt rotates around the planet carrier head. Belt and head are positioned above a flat underlying belt for carrying the dough and moving it forward.

The regulation in this type of plant of the dough-forming slot is effected only thanks to the movement of the head. This implies a certain construction complexity, which leads to an increase in costs and skill in actuating the movements of the parts.

In addition, this arrangement causes certain difficulties in cleaning and maintenance interventions of the parts cooperating with each other.

EP 0 953 287 A2 discloses an apparatus for stretching of dough according to the preamble of claim 1.

EP 1 449 437 A2 discloses an apparatus for sheeting a dough mass into a flat strip. A curved guide plate faces an array of rollers driven by a planet carrier head, the plate swinging around its upstream rounded edge for controlling the gap size. A general objective of the present invention is to solve the above drawbacks of the known art in an extremely simple, economical and particularly functional manner.

Another objective of the present invention is to provide a unit for the creation of dough equipped with an easy and immediate regulation of the slot for forming the dough.

Another objective of the present invention is to provide a unit for the creation of dough which has a particularly simple structure and in which the components are limited to the maximum.

Yet another objective of the present invention is to provide a unit for the creation of dough which allows immediate interventions without the removal of parts, either for cleaning or for maintenance.

In view of the above objectives, according to the present invention, a unit has been conceived for the creation of dough having the characteristics specified in the enclosed claims.

The structural and functional characteristics of the present invention and its advantages with respect to the known art will appear more evident from the following description, referring to the enclosed schematic drawings, which illustrates, inter alia, a schematization of an embodiment of a unit for the creation of dough produced according to the same invention.

In the drawings:

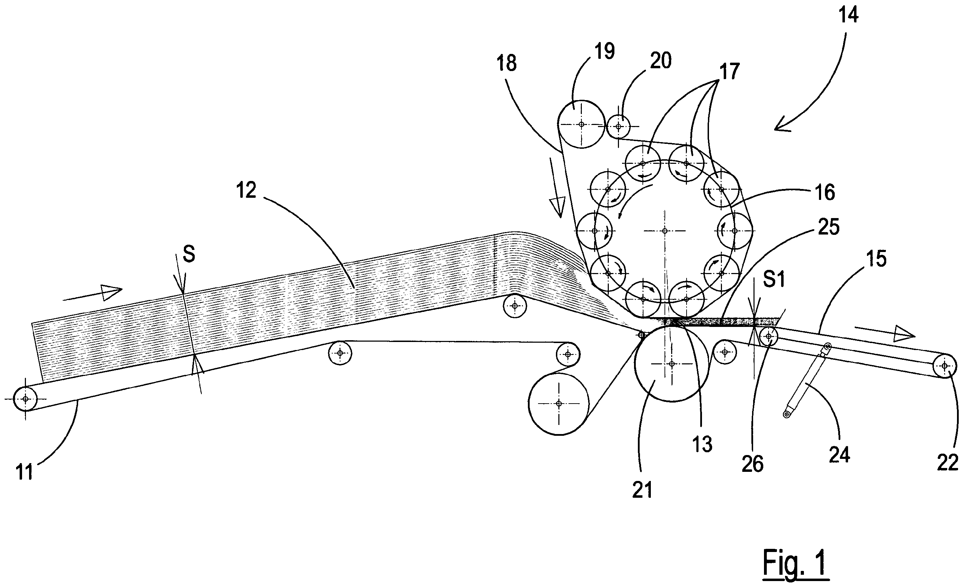

- figure 1 shows a raised view of a unit for the creation of dough in a lowered position; and
- figure 2 shows a raised view of a unit for the creation of dough in a raised position.

With reference to the figures, these illustrate a unit for the creation of dough in accordance with the present invention, which can be inserted in a unit for the treatment of dough.

This unit is situated downstream of a conveyor belt 11 which feeds a continuous forward-moving flow of dough 12, having a certain initial depth S.

The flow of material S is sent to a slot (which will be better illustrated further on) of the unit for the creation of dough of the invention. The slot is characterized by an upper head 14 and a second lower conveyor belt 15 according to the invention.

The upper head 14 comprises a planet carrier head (16) equipped with a series of rollers 17 around which a belt 18 is wound. There is also a pair of stretching rollers 19, 20 which guarantee the correct functioning of the belt 18, in addition to a possible cleaning of the same from doughy material possibly remaining on the belt 18.

The lower conveyor belt 15 according to the invention, has a main roller 21 at a first end, positioned almost perpendicular, below the upper head 14, where a first section 13 of fixed slot begins.

The lower conveyor belt 15 extends forwards towards a counter-roller 22 situated at its other end defining a second section 23 of slot having a variable dimension.

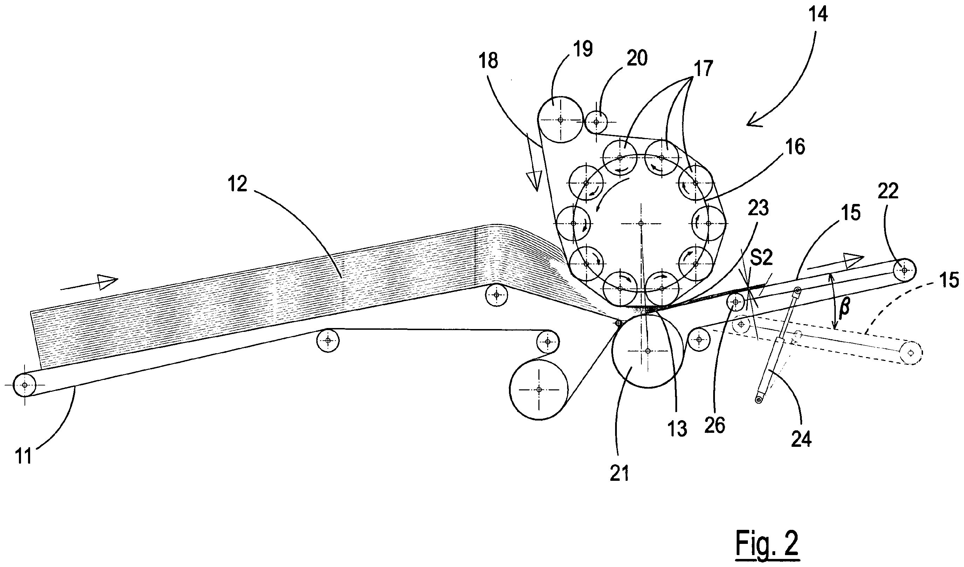

Except for the main roller 21, in fact, the remaining portion of the second lower conveyor belt 15 can oscillate upwards in a vertical position (figure 2) through a pair of oscillating cylinders 24, articulated on one side with the belt 15 and on the other with the structure (only one of which is shown).

A deviating roller 26, which always acts on the belt 15, moving with the rotating structure of the lower conveyor belt 15, allows said lower conveyor belt 15 to be adequately arranged with variations in the angle β, by tightening it and guaranteeing an optimum advancement and calibration of the dough.

In this way, as already partly mentioned, the regulation slot of the flow of dough 12 allows a final thickness of the dough at the outlet 25 to be obtained with a variable thickness S1/S2.

This variability depends on the rotation angle β in which the lower conveyor belt 15 can oscillate upwards or downwards in a vertical position.

In this way, through this simple arrangement, an easier regulation of the final thickness S1/S2 of the dough at the outlet can be obtained.

Furthermore, when the lower conveyor belt 15 is lowered, in its maximum lowering position, an ample operating space can be obtained for effecting cleaning and maintenance interventions in the specific area of maximum compression of the dough.

In addition to exploiting the arrangement of the planet carrier head 16, carrying rollers 17 and belt 18 around the rollers 17, a pre-determined calibration of the outlet slot of the dough can be obtained, as desired.

In this way, there is an almost optimal cooperation between the two parts of the unit.

There is also an optimum alternating compression action on the dough transported by the lower conveyor belt 15 which, as it oscillates through the arrangement of the cylinders 24, acts as desired and according to requirements.

All the most important characteristics forming part of the present invention, can be found in this non-limiting example illustrated.

The objective indicated in the preamble of the description has therefore been achieved.

The forms of the structure for the embodiment of a unit of the invention, as also the materials and assembly modes, can obviously differ from those shown for purely illustrative and non-limiting purposes in the drawings.

The protection scope of the present invention is therefore delimited by the enclosed claims.

## Claims

1. Adjustable unit for the creation of dough comprising an upper head (14) and a lower conveyor belt (15), wherein said unit is placed downstream a conveyer belt (11) that provides for a continuous flux of dough (12) with a certain initial thickness (S) in front of a slot identified by the upper head (14) and the lower conveyer belt (15), wherein said upper head (14) comprises a planet carrier head (16) bearing an array of rollers (17), **characterized in that** a belt (18) winds itself up around the array of rollers (17) and **in that** said lower conveyer belt (15) is swinging according to a certain angle (β) around a main end roller (21) placed below said upper head (14) and **in that** said lower conveyer belt (15) is swinging by means of cylinders (24) according to said certain angle (β).

2. Adjustable unit for the creation of dough according to claim 1, **characterized in that** it provides for a further roller (26) that operates on said lower conveyer belt (15).

3. Adjustable unit for the creation of dough according to one or more of the previous claims, **characterized in that** said slot comprises an initial part (13) with fixed dimensions followed by a second part (23) with variable dimensions.

## Patentansprüche

1. Einstellbare Einheit für die Herstellung von Teig, umfassend einen oberen Kopf (14) und ein unteres Förderband (15), wobei die Einheit stromabwärts eines Förderbandes (11) platziert ist, das für einen kontinuierlichen Fluss von Teig (12) mit einer bestimmten Anfangsdicke (S) vor einem durch den oberen Kopf (14) und das untere Förderband (15) bestimmten Schlitz bereitstellt, wobei der obere Kopf (14) einen Planetenträgerkopf (16) umfasst, der eine Anordnung von Walzen (17) lagert,
**dadurch gekennzeichnet, dass**
sich ein Band (18) um die Anordnung von Walzen (17) herumwickelt, und dass das untere Förderband (15) gemäß einem bestimmten Winkel (β) um eine Hauptendwalze (21) herum schwingt, die unter dem oberen Kopf (14) platziert ist, und dass das untere Förderband (15) mittels Zylindern (24) gemäß dem bestimmten Winkel (β) schwingt.

2. Einstellbare Einheit für die Herstellung von Teig nach Anspruch 1, **dadurch gekennzeichnet, dass** sie eine weitere Walze (26) zur Verfügung stellt, die an dem unteren Förderband (15) arbeitet.

3. Einstellbare Einheit für die Herstellung von Teig nach einem oder mehreren der vorhergehenden Ansprüche, **dadurch gekennzeichnet, dass** der Schlitz einen Anfangsteil (13) mit festen Abmessungen umfasst, dem ein zweiter Teil (23) mit variablen Abmessungen folgt.

## Revendications

1. Unité réglable pour la réalisation de pâte, comprenant une tête supérieure (14) et une bande transporteuse inférieure (15), sachant que
ladite unité est placée en aval d'une bande transporteuse (11) qui fournit un flux continu de pâte (12) avec une certaine épaisseur (S) initiale, en face d'une fente définie par la tête supérieure (14) et la bande transporteuse inférieure (15), sachant que ladite tête supérieure (14) comprend une tête porte-satellites (16) portant un ensemble de rouleaux (17),
**caractérisée en ce qu'**une bande (18) s'enroule autour de l'ensemble de rouleaux (17), et **en ce que** ladite bande transporteuse inférieure (15) bascule suivant un certain angle (ß) autour d'un rouleau d'extrémité principal (21) placé sous ladite tête supérieure (14), et **en ce que** ladite bande transporteuse inférieure (15) bascule au moyen de vérins (24) suivant ledit angle (ß).

2. Unité réglable pour la réalisation de pâte selon la revendication 1, **caractérisée en ce qu'**elle est pourvue d'un rouleau (26) supplémentaire qui agit sur ladite bande transporteuse inférieure (15).

3. Unité réglable pour la réalisation de pâte selon une ou plusieurs des revendications précédentes, **caractérisée en ce que** ladite fente comporte une partie initiale (13) avec des dimensions fixes, suivie d'une deuxième partie (23) avec des dimensions variables.
